# EUROPÄISCHE PATENTSCHRIFT

(11) **EP 4 296 661 B1**
(45) Veröffentlichungstag und Bekanntmachung des Hinweises auf die Patenterteilung: **15.04.2026**
(21) Anmeldenummer: 23172213.3
(22) Anmeldetag: 09.05.2023
(51) Int. Cl.: G01N 29/04, G01N 29/44

(54) **VERFAHREN UND VORRICHTUNG ZUM RÜCKVERFOLGEN EINER HERKUNFT EINES BATTERIEZELLENBAUTEILS**
METHOD AND DEVICE FOR MONITORING THE ORIGIN OF A BATTERY CELL COMPONENT
PROCÉDÉ ET DISPOSITIF DE SUIVI D'UNE ORIGINE D'UN COMPOSANT D'ÉLÉMENT DE BATTERIE

(30) Priorität: 21.06.2022 DE 102022115352
(43) Veröffentlichungstag der Anmeldung: 27.12.2023
(73) Patentinhaber: PowerCo SE, 38239 Salzgitter (DE)
(72) Erfinder: Rohkohl, Erik, 38300 Wolfenbüttel (DE); Schönemann, Malte, 38104 Braunschweig (DE); Ehmann, Dr. Sebastian, 38302 Wolfenbüttel (DE); Bodrov, Yury, 38159 Vechelde (DE)
(74) Vertreter: FDST Patentanwälte

(56) Entgegenhaltungen:
- WO-A1-2018/046357
- US-A1- 2021 175 553

## Beschreibung

Die Erfindung betrifft ein Verfahren und eine Vorrichtung zum Rückverfolgen einer Herkunft eines Batteriezellenbauteils.

Bei Herstellern von Bauteilen besteht ein großes Interesse daran, möglichst weitreichende Kenntnisse über die Herkunft Ihrer hergestellten Bauteile auch über den Herstellungsprozess hinaus zu haben. Dabei geht es nicht nur die Rückverfolgung der Herkunft eines am Markt befindlichen Bauteils zu seinem Hersteller. Vielmehr ist es im Interesse der Hersteller ebenfalls Kenntnisse über die mit dem individuellen Bauteil verbundenen Herstellfaktoren, wie eingesetzte Materialien, deren Ursprünge und eingesetzte Maschinen, zu besitzen. Dieses Wissen stellt nicht nur die Qualität des Bauteils sicher, sondern erlaubt auch andere Bauteile zu identifizieren, die aufgrund eines nachträglich bekannt gewordenen Mangels eines Bauteils am Markt voraussichtlich ebenfalls unzureichend sind, weil sie beispielsweise von demselben Material- oder Herstellungsfehler betroffen sind. Somit können die Hersteller zielgerecht genau die Bauteile zurückrufen, welche unter denselben Bedingungen hergestellt worden sind und bei denen der bekannt gewordene Mangel ebenfalls zu erwarten ist. Insofern kann eine eindeutige Markierung des Bauteils zu dessen Rückverfolgung verhindern, dass sämtliche Bauteile zurückgerufen werden müssen.

Allerdings lassen sich nicht alle Bauteile mit entsprechenden Markierungen versehen, ohne dadurch deren optischen Gesamteindruck zu beeinträchtigen.

Ein Beispiel für ein Verbundwerkstück, bei welchem eine dauerhafte Markierung vorgeschlagen wird, die den optischen Gesamteindruck nicht beeinflussen soll, ist aus der WO 2018 046357 A1 bekannt. Die dortige Markierung wird dadurch realisiert, dass eine metallische Deckschicht und eine nichtmetallische Deckschicht übereinanderliegend miteinander verbunden werden und die metallische Deckschicht auf der zu der nichtmetallischen Deckschicht zugewandten Seite ein Markierungsprofil aufweist. Demnach bleibt die Markierung von außen unerkannt, kann aber mittels einer geeigneten Detektionseinrichtung erkannt werden.

Aus dem Dokument US 2021 00175553 A1 ist eine akustische signalbasierte Analyse von Batterien bekannt.

Darüber hinaus gibt es Bauteile, die aus technischen Gründen überhaupt nicht oder nur sehr umständlich mit Markierungen versehen werden können, ohne die Funktion der Bauteile zu beeinträchtigen. Vor allem im Bereich von Batteriezellenbauteilen hat sich die Verwendung von klassischen Markierungen als besonders schwierig herausgestellt. Batteriezellenbauteile weisen häufig verschiedene physikalische Oberflächeneigenschaften auf, die eine Markierung erschweren. Zudem werden ihre Zwischenprodukte zum Teil in sehr großen Losgrößen von mehr als 1000 m Länge zu Rollen aufgerollt und lediglich die Rollen entsprechend mit einer Markierung versehen.

Der Erfindung liegt daher nun die Aufgabe zugrunde, ein Verfahren und eine Vorrichtung zu entwickeln, welche/s eine Rückverfolgung der Herkunft für eine größere Anzahl von Bauteilarten ermöglicht, ohne dabei die Funktion und den optischen Gesamteindruck der Bauteile zu beeinträchtigen.

Die obige Aufgabe wird gelöst durch ein Verfahren und eine Vorrichtung gemäß den unabhängigen Patentansprüchen. Bevorzugte Weiterbildungen sind Gegenstand der jeweils rückbezogenen Unteransprüche.

Ein erster Aspekt der Erfindung betrifft ein Verfahren zum Rückverfolgen einer Herkunft eines Batteriezellenbauteils. Das Verfahren umfasst die Schritte:
Erfassen eines ersten Fußabdrucks, der indikativ ist für eine individuelle und einzigartige Oberflächenstruktur eines ersten Zwischenprodukts eines herzustellenden Batteriezellenbauteils, mittels einer ersten Sensoreinheit und
Bestimmen einer Herkunft eines zu überprüfenden Batteriezellenbauteils unter Verwendung des ersten Fußabdrucks und eines zweiten Fußabdrucks, der indikativ ist für eine individuelle und einzigartige Oberflächenstruktur des zu überprüfenden Batteriezellenbauteils.

Der Erfindung liegt die Einsicht zugrunde, dass jedes hergestellte Zwischenprodukt eines Batteriezellenbauteils eine individuelle und einzigartige Oberflächenstruktur aufweist, die sich entlang der Herstellungsprozesskette bis zum Endprodukt nachverfolgen lässt. Diese Einzigartigkeit der Oberflächenstrukturen wird erfindungsgemäß in einem charakteristischen Fußabdruck abgebildet. Während der Herstellung eines Batteriezellenbauteils können entlang seiner Prozesskette verschiedene Fußabdrücke für die einzelnen Zwischenprodukte aufgenommen werden. Durch Vergleich eines ersten Fußabdrucks eines ersten Zwischenprodukts eines Batteriezellenbauteils mit einem zweiten Fußabdruck eines entlang der Prozesskette späteren Zwischen- oder Endprodukts des Batteriezellenbauteils kann der Rückschluss erfolgen, ob das zu überprüfende Zwischen- oder Endprodukt des Batteriezellenbauteils dem ersten Zwischenprodukt zuzuordnen ist oder nicht. Mit anderen Worten lässt sich durch Vergleich der beiden Fußabdrücke miteinander eine Herkunft eines Batteriezellenbauteils zu dem Zwischenprodukt aus dem Herstellungsprozess zurückverfolgen, ohne eine Beeinträchtigung des Zwischen- oder Endprodukts zu bedingen. Insbesondere muss keine strukturelle Veränderung des Zwischen- oder Endprodukts wie durch Einbrennen oder Aufdrucken einer Markierung erfolgen.

Die zum Vergleich herangezogenen Fußabdrücke können naturgemäß einen unterschiedlichen Informationsgehalt umfassen. Dieser liegt darin begründet, dass das erste Zwischenprodukt häufig in einer sehr großen Losgröße vorliegt und im Rahmen des Herstellungsprozesses in eine Vielzahl von kleineren Zwischen- oder Endprodukten geteilt wird. Demnach kann der erste Fußabdruck Informationen über die Oberflächenstruktur von einer Vielzahl von kleineren späteren Zwischen- und Endprodukten umfassen. Der zweite Fußabdruck umfasst in diesem Fall analog Informationen über eine Oberflächenstruktur, die nur einem kleinen Ausschnitt des ersten Fußabdrucks entsprechen können.

Bevorzugt sind die jeweiligen Fußabdrücke indikativ für die Oberflächenstruktur und eine oberflächennahe Struktur des jeweiligen Zwischen- und/oder Endprodukts. Beispielsweise umfasst die oberflächennahe Struktur einen Bereich von 0,5 mm, vorzugsweise 0,25 mm, besonders bevorzug 0,1 mm unterhalb der Oberflächenstruktur des jeweiligen Zwischen- und/oder Endprodukts. Durch das zusätzliche Abtasten der oberflächennahen Struktur kann die Informationstiefe der Fußabdrücke vergrößert und die Verlässlichkeit der Rückverfolgung verbessert werden.

In bevorzugter Ausgestaltung ist vorgesehen, dass das Batteriezellenbauteil eine Elektrode ist. Hierbei umfasst das erste Zwischenprodukt bevorzugt eine mit Elektroden beschichtete Trägerfolie. Beispielsweise ist die Trägerfolie eine Metallfolie aus Kupfer und/oder Aluminium. Eine Länge der mit Elektroden beschichteten Trägerfolie kann mindestens 10 m, vorzugsweise mindestens 100 m, besonders bevorzugt mindestens 1000 m umfassen. Ebenfalls bevorzugt kann die mit Elektroden beschichtete Trägerfolie zu einer Rolle aufgerollt sein.

Alternativ kann das Batteriezellenbauteil ein Separator sein. Das erste Zwischenprodukt ist hierbei bevorzugt eine Separatorfolie, die eine Vielzahl von Separatoren aufweist.

In weiterer bevorzugter Ausgestaltung wird eine Vielzahl von Fußabdrücken mittels der ersten Sensoreinheit erfasst, wobei die Fußabdrücke indikativ sind für jeweils eine Oberflächenstruktur eines ersten Zwischenprodukts von einer Vielzahl von Batteriezellenbauteilen und das Bestimmen der Herkunft des zu überprüfenden Batteriezellenbauteils unter Verwendung der Vielzahl von Fußabdrücken erfolgt. Mit anderen Worten soll bevorzugt ein Fußabdruck für das erste Zwischenprodukt einer Vielzahl von Batteriezellenbauteilen, insbesondere eines jeden Batteriezellenbauteils, erfasst und bevorzugt in einer Datenbank abgelegt werden. Die Datenbank dient dann als Grundlage für eine virtuelle Markierung der Batteriezellenbauteile. Eine lückenlos zu jedem hergestellten Batteriezellenbauteils gefüllte Datenbank kann beispielsweise bei Haftungsfragen herangezogen werden, um die Herkunft des Batteriezellenbauteils abzuklären. Außerdem bietet eine derartige Datenbank den Vorteil, dass Händler, Verarbeiter und Verbraucher einen Fußabdruck (den zweiten Fußabdruck) des am Markt befindlichen Batteriezellenbauteils erfassen und durch Abfrage mit der Datenbank ermitteln können, ob es um ein originales Batteriezellenbauteil des Herstellers handelt oder nicht. Insofern kann eine Fälschungssicherheit der Batteriezellenbauteile erreicht werden.

In weiterer bevorzugter Ausgestaltung umfasst die erste Sensoreinheit einen ersten Ultraschallsender und einen ersten Ultraschallempfänger zum Erfassen des ersten Fußabdrucks umfasst. Ultraschallsensoren sind kostengünstig und erfassen nicht nur Informationen über Oberflächenstrukturen, sondern auch über oberflächennahe Strukturen. Die Vorteile von Informationen über oberflächennahe Strukturen wurden bereits weiter oben ausgeführt. In dieser bevorzugten Ausgestaltung basiert der erste Fußabdruck auf einem Ultraschallspektrum der Oberflächenstruktur und der oberflächennahen Struktur des ersten Zwischenprodukts des herzustellenden Batteriezellenbauteils und der zweite Fußabdruck auf ein Ultraschallspektrum der Oberflächenstruktur und oberflächennahen Struktur des zu überprüfenden Batteriezellenbauteils.

Bevorzugt sind der erste Ultraschallempfänger und der erste Ultraschallsender auf einer Seite oder alternativ auf gegenüberliegenden Seiten des ersten Zwischenprodukts angeordnet. Die Anordnung des Ultraschallempfängers und -senders entscheidet darüber, ob im Wesentlichen Ultraschallreflektionssignale oder -transmissionssignale erfasst werden. Das Anordnen des Ultraschallempfängers und -senders auf einer Seite des Zwischenprodukts lässt sich in einer Herstellungsanlage leichter integrieren und ist daher besonders bevorzugt.

Alternativ oder zusätzlich kann die erste Sensoreinheit einen optischen und/oder elektromagnetischen Sensor zum Erfassen des ersten Fußabdrucks umfassen. Entsprechend können die Fußabdrücke optische oder elektromagnetische Spektren der Oberflächenstruktur der Batteriezellenbauteile umfassen. Optische Sensoren sind kostengünstig und hervorragend zur Erfassung von Oberflächenstrukturen geeignet, während elektromagnetische Sensoren darüber hinaus auch Informationen zu Materialeigenschaften der Batteriezellenbauteile erfassen können. Materialeigenschaften können beispielsweise eine Dichte und/oder eine Materialzusammensetzung des Batteriezellenbauteils sein. Demnach können die Fußabdrücke ferner indikativ sein für eine Materialeigenschafft des herzustellenden Batteriezellenbauteils, insbesondere im Falle eines elektromagnetischen Sensors. Bevorzugt kann die erste Sensoreinheit eine beliebige Kombination aus den oben beschriebenen Sensoren aufweisen. Durch die Kombination verschiedener Sensorarten kann die Informationstiefe der Fußabdrücke vergrößert und/oder eine Redundanz hergestellt werden, wodurch die Verlässlichkeit der Rückverfolgung verbessert werden kann.

In weiterer bevorzugter Ausgestaltung umfasst das Verfahren ferner die Schritte:
nach dem Erfassen des ersten Fußabdrucks mittels der ersten Sensoreinheit, Durchführen eines Prozessschrittes zum Überführen des ersten Zwischenprodukts in ein zweites Zwischenprodukt und
Erfassen eines dritten Fußabdrucks, der indikativ ist für eine Oberflächenstruktur des zweiten Zwischenprodukts des herzustellenden Batteriezellenbauteils, mittels einer zweiten Sensoreinheit,
wobei das Bestimmen der Herkunft des zu überprüfenden Batteriezellenbauteils ferner unter der Verwendung des dritten Fußabdrucks erfolgt.

Bei der Herstellung von Batteriezellenbauteilen werden die Zwischenprodukte entlang der Prozesskette grundsätzlich von Prozessschritt zu Prozessschritt verändert. Der Verständlichkeit halber wird im Nachfolgenden nur auf einen Prozessschritt Bezug genommen. Selbstverständlich kann die hierin offenbarte Lehre auch auf mehrere Prozessschritte angewandt und die erfindungsgemäßen Vorteile analog erzielt werden.

Das erste Zwischenprodukt wird in dieser bevorzugten Ausgestaltung durch die bewirkte Veränderung des Prozessschrittes in ein zweitens Zwischenprodukt überführt. Das zweite Zwischenprodukt entspricht also dem ersten Zwischenprodukt und wird lediglich dahingehend unterschieden, dass es eine Veränderung durch den Prozessschritt erfahren hat. Die bewirkte Veränderung kann einen Einfluss auf die Oberflächenstruktur des ersten Zwischenprodukts haben, so dass die Oberflächenstruktur des zweiten Zwischenprodukts entsprechend verändert ist. Daher wird in dieser bevorzugten Ausgestaltung die Oberflächenstruktur des zweiten Zwischenprodukts durch einen dritten Fußabdruck mittels einer zweiten Sensoreinheit erfasst. Bevorzugt wird der dritte Fußabdruck mit zu dem ersten Fußabdruck korrespondierenden Informationen in der Datenbank gespeichert. Mittels korrespondierenden Informationen bezüglich des ersten und dritten Fußabdrucks kann folglich ein Rückschluss der Oberflächenstruktur des zweiten Zwischenprodukts auf die Oberflächenstruktur des ersten Zwischenprodukts gezogen werden.

Beispielhafte Prozessschritte können ein Kalandern des ersten Zwischenprodukts, ein Trocknen des ersten Zwischenprodukts und ein Teilen des ersten Zwischenprodukts sein. Insbesondere das Kalandern und das Trocknen können einen erheblichen Einfluss auf die Oberflächenstruktur des (ersten) Zwischenprodukts bewirken. Bevorzugt ist das erste Zwischenprodukt eine Rolle aus einer mit Elektroden beschichtete Folie und das zweite Zwischenprodukt eine entsprechend kalanderte Rolle, eine geteilte kalanderte Rolle oder eine abgetrennte noch zu trocknende Elektrode. Das erste Zwischenprodukt kann aber auch eine kalanderte Rolle aus einer mit Elektroden beschichtete Folie sein, wobei das zweite Zwischenprodukt dann eine geteilte kalanderte Rolle oder eine abgetrennte noch zu trocknende Elektrode sein kann. Ferner kann das erste Zwischenprodukt eine geteilte kalanderte Rolle aus einer mit Elektroden beschichtete Folie sein, wobei das zweite Zwischenprodukt dann eine abgetrennte noch zu trocknende Elektrode sein kann.

Mit dem dritten Fußabdruck und den entsprechenden korrespondieren Informationen zu dem ersten Fußabdruck können die durch Prozessschritte entlang der Prozesskette bewirkten Veränderungen der Oberflächenstruktur des ersten Zwischenprodukts, die sich ebenfalls in dem Endprodukt, also dem zu überprüfenden Batteriezellenbauteil, niederschlagen, berücksichtigt und die Herkunft entsprechend verlässlicher zurückverfolgt werden.

Bevorzugt erfolgt ein Abgleich des zweiten Fußabdrucks mit dem dritten Fußabdruck. Basierend auf einem Ergebnis des Abgleichs wird dann die Herkunft des zu überprüfenden Batteriezellenbauteils bestimmt. Wird also eine Übereinstimmung zwischen dem zweiten und dritten Fußabdruck festgestellt, so kann die Herkunft des zu überprüfenden Batteriezellenbauteils über die korrespondierenden Informationen zwischen dem ersten und dritten Fußabdruck zu dem ersten Zwischenprodukt zurückverfolgt werden.

In einer weiteren bevorzugten Ausgestaltung umfasst die erste Sensoreinheit ein mittels Trainingsdaten trainiertes neuronales Netzwerk und/oder die zweite Sensoreinheit einen zweiten Ultraschallsender und einen zweiten Ultraschallempfänger zum Erfassen des dritten Fußabdrucks. Hiermit kann der erste Fußabdruck unter Verwendung des trainierten neuronalen Netzwerkes erfasst werden. Ein entsprechend trainiertes neuronales Netzwerk hat den Vorteil, dass es einen virtuellen Sensor darstellt, der einen physischen Sensor überflüssig machen kann. Dadurch kann die Erfassung des ersten Fußabdrucks vereinfacht und Kosten für zusätzliche Sensoren eingespart werden.

Die Trainingsdaten umfassen bevorzugt eine Vielzahl von Trainingsfußabdrücken und eine Vielzahl von geänderten Trainingsfußabdrücken, wobei die Trainingsfußabdrücke indikativ sind für jeweils eine Oberflächenstruktur eines ersten Zwischenprodukts von einer Vielzahl von Batteriezellenbauteilen und die geänderten Trainingsfußabdrücke indikativ sind für jeweils eine Oberflächenstruktur eines zweiten Zwischenprodukts der Vielzahl von Batteriezellenbauteilen. Durch derartig ausgestaltete Trainingsdaten kann die Güte des neuronalen Netzwerkes verbessert werden, so dass das neuronale Netzwerk einen ersten Fußabdruck mit einem hinreichend kleinen Fehler rekonstruieren kann.

Ein weiterer Aspekt der Erfindung betrifft eine Vorrichtung zum Rückverfolgen einer Herkunft eines Batteriezellenbauteils. Die Vorrichtung weist eine erste Sensoreinheit zum Erfassen eines ersten Fußabdrucks, der indikativ ist für eine individuelle und einzigartige Oberflächenstruktur eines ersten Zwischenprodukts eines herzustellenden Batteriezellenbauteils, und eine Steuereinheit auf, die dazu eingerichtet ist, das obige Verfahren durchzuführen, insbesondere eine Herkunft eines zu überprüfenden Batteriezellenbauteils unter Verwendung des ersten Fußabdrucks und eines zweiten Fußabdrucks, der indikativ ist für eine individuelle und einzigartige Oberflächenstruktur des zu überprüfenden Batteriezellenbauteils, zu bestimmen. Die im Zusammenhang mit dem Verfahren beschriebenen Merkmale und deren Vorteile können analog für die Vorrichtung herangezogen werden. Insofern wird im Wesentlichen auf eine wiederholende Beschreibung verzichtet.

In einer bevorzugten Ausgestaltung umfasst die erste Sensoreinheit einen ersten Ultraschallsender und einen ersten Ultraschallempfänger zum Erfassen des ersten Fußabdrucks.

In weiterer bevorzugter Ausgestaltung umfasst die Vorrichtung eine Verarbeitungseinheit zum Durchführen eines Prozessschrittes zum Überführen des ersten Zwischenprodukts in ein zweites Zwischenprodukt und eine zweite Sensoreinheit zum Erfassen eines dritten Fußabdrucks, der indikativ ist für eine Oberflächenstruktur des zweiten Zwischenprodukts des herzustellenden Batteriezellenbauteils, wobei die Steuereinheit ferner dazu eingerichtet ist, die Herkunft des zu überprüfenden Batteriezellenbauteils unter der Verwendung des dritten Fußabdrucks zu bestimmen.

Bevorzugt ist die Steuereinheit dazu eingerichtet, den zweiten Fußabdruck mit dem dritten Fußabdruck abzugleichen und basierend auf einem Ergebnis des Abgleichs die Herkunft des zu überprüfenden Batteriezellenbauteils zu bestimmen.

Ebenfalls bevorzugt umfasst die erste Sensoreinheit ein mittels Trainingsdaten trainiertes neuronales Netzwerk zum Erfassen des ersten Fußabdrucks und/oder die zweite Sensoreinheit einen zweiten Ultraschallsender und einen zweiten Ultraschallempfänger zum Erfassen des dritten Fußabdrucks.

In weiterer bevorzugter Ausgestaltung weist die Vorrichtung eine Speichereinheit auf, auf welcher die Trainingsdaten gespeichert sind, wobei die Trainingsdaten eine Vielzahl von Trainingsfußabdrücken und eine Vielzahl von geänderten Trainingsfußabdrücken umfassen, wobei die Trainingsfußabdrücke indikativ sind für jeweils eine Oberflächenstruktur eines ersten Zwischenprodukts von einer Vielzahl von Batteriezellenbauteilen und die geänderten Trainingsfußabdrücke indikativ sind für jeweils eine Oberflächenstruktur eines zweiten Zwischenprodukts der Vielzahl von Batteriezellenbauteilen.

In einer weiteren bevorzugten Ausgestaltung weist die erste Sensoreinheit einen dritten Sensor zum Erfassen von einer Materialeigenschaft des herzustellenden Batteriezellenbauteils auf und der erste Fußabdruck ist ferner indikativ für die Materialeigenschafft des herzustellenden Batteriezellenbauteils.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines erfindungsgemäßen Verfahrens gemäß einer Durchführungsform; und
- Figur 2: eine schematische Darstellung eines erfindungsgemäßen Verfahrens gemäß einer Durchführungsform unter Verwendung eines neuronalen Netzwerks.

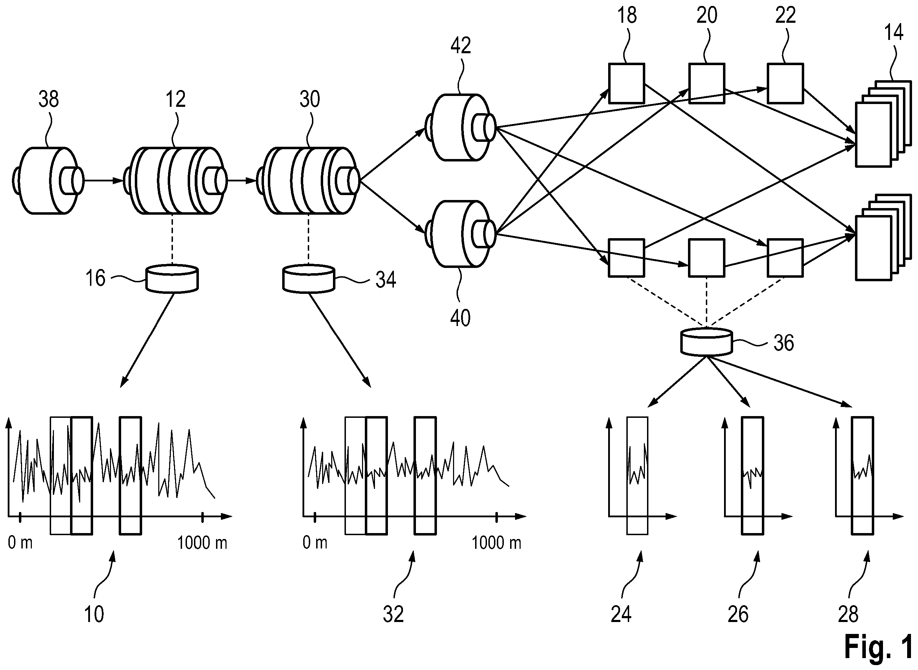

Figur 1 zeigt eine schematische Darstellung eines erfindungsgemäßen Verfahrens zum Rückverfolgen einer Herkunft eines Batteriezellenbauteils gemäß einer Durchführungsform. Mit dem erfindungsgemäßen Verfahren kann die Herkunft eines Batteriezellenbauteils wie einer Elektrode oder eines Separators rückverfolgt werden, ohne das Batteriezellenbauteil strukturell zum Zwecke der Markierung verändern zu müssen. Das erfindungsgemäße Verfahren und die erfindungsgemäße Vorrichtung werden im Folgenden anhand einer Elektrode als Batteriezellenbauteil und in Bezug zu einer Prozesskette der Elektrodenfertigung beschrieben. Zunächst wird die Prozesskette geschildert, um im Anschluss das erfindungsgemäße Verfahren und die erfindungsgemäße Vorrichtung mit Bezug auf diese verständlich darzustellen.

Figur 1 zeigt in der oberen Hälfte schematisch eine Prozesskette zum Herstellen von einer Vielzahl von Elektroden, die für die Herstellung von Akkumulatoren als Elektrode-Separator-Elektrode-Paarungen verwendet werden können. In einem ersten Schritt wird eine Rolle 38, die aus einer aufgerollten Metallfolie aus Kupfer und/oder Aluminium besteht, bereitgestellt und die Metallfolie der Rolle 38 mit einer Vielzahl von Elektroden beschichtet. Dieser Prozess ist auch unter dem Begriff Aufschlemmen bekannt. Die daraus entstehende Rolle aus beschichteter Metallfolie stellt ein erstes Zwischenprodukt 12 entlang der Prozesskette dar. Das erste Zwischenprodukt 12 wird beispielsweise in einem weiteren Prozessschritt mittels eines Kalanders zu einem zweiten Zwischenprodukt 30 verarbeitet. Da die Oberflächenstruktur des ersten Zwischenprodukts 12 durch das Kalandern verändert wird, weist das zweite Zwischenprodukt 30 eine gegenüber der Oberflächenstruktur des ersten Zwischenprodukts 12 veränderte Oberflächenstruktur auf. Das zweite Zwischenprodukt 30 ist demnach eine kalanderte, beschichtete Rolle. Diese wird in einem weiteren Prozessschritt in ein drittes Zwischenprodukt 40, 42 überführt. Hierbei wird die kalanderte beschichtete Rolle beispielsweise durch Schneiden in zwei geschnittene, kalanderte, beschichtete Rollen geteilt. Aus diesen Rollen wird dann die Vielzahl von Elektroden hergestellt.

Das erfindungsgemäße Verfahren soll exemplarisch anhand von drei Elektroden der Vielzahl von hergestellten Elektroden erläutert werden. Die drei Elektroden sind als zu überprüfendes Batteriezellenbauteil 18, 20, 22 in Figur 1 dargestellt. Die für die Herstellung von Akkumulatoren verwendeten Elektrode-Separator-Elektrode-Paarungen sind als herzustellendes Batteriezellenbauteil 14 abgebildet.

Bei dem erfindungsgemäßen Verfahren wird zunächst ein erster Fußabdruck 10, der indikativ ist für eine Oberflächenstruktur des ersten Zwischenprodukts 12 des herzustellenden Batteriezellenbauteils 14, mittels einer ersten Sensoreinheit 16 erfasst. Der erste Fußabdruck bildet die einzigartige Oberflächenstruktur des ersten Zwischenprodukts 12 ab und dient als Grundlage für die Rückverfolgung einer Herkunft des zu überprüfenden Batteriezellenbauteils 18, 20, 22. Zur Erfassung von weiteren Fußabdrücken von Zwischen- und/oder Endprodukten stehen exemplarisch eine zweite Sensoreinheit 34 und eine dritte Sensoreinheit 36 zur Verfügung.

Die dritte Sensoreinheit 36 erfasst für jedes zu überprüfende Batteriezellenbauteils 18, 20, 22 einen zweiten Fußabdruck 24, 26, 28, der indikativ ist für eine Oberflächenstruktur des jeweiligen zu überprüfenden Batteriezellenbauteils 18, 20, 22. Die zweite Sensoreinheit 34 erfasst hingegen einen dritten Fußabdruck 32, der indikativ ist für eine Oberflächenstruktur des zweiten Zwischenprodukts 30 des herzustellenden Batteriezellenbauteils 14. Die Fußabdrücke können in einem Speicher (nicht dargestellt) abgelegt sein. Ferner kann eine entsprechend eingerichtete Steuereinheit (nicht dargestellt) vorgesehen sein, um die jeweiligen Fußabdrücke 10, 24, 26, 28, 32 unter Verwendung der Sensoreinheiten 16, 34, 36 zu erfassen.

Die in Figur 1 dargestellten Fußabdrücke 10, 24, 26, 28, 32 zeigen jeweils ein Ultraschallspektrum von reflektierten Ultraschallsignalen der entsprechenden Oberflächenstrukturen und oberflächennahen Strukturen der jeweiligen Zwischenprodukte 12, 18, 20, 22, 30. Auf der Ordinate ist eine Stärke des Ultraschallsignals (Magnitude) aufgetragen, während die Abszisse eine Ortsinformation entlang der Oberflächenstruktur der jeweiligen Zwischenprodukte 12, 18, 20, 22, 30 darstellt. Da die verwendeten Metallfolien der Rollen 38 beispielshaft 1000 m lang sind, ist auf der Abszisse des ersten und dritten Fußabdrucks 10, 32 ein Wertebereich von 0 bis 1000 m angegeben.

Um nun die Herkunft des zu überprüfenden Batteriezellenbauteils 18, 20, 22 zu ermitteln, wird der erste Fußabdruck 10 mit dem zweiten Fußabdruck 24, 26, 28 verglichen. Dies kann mittels einer dazu eingerichteten Steuereinheit erfolgen. Stimmen die jeweiligen Ultraschallspektren des ersten Fußabdrucks 10 und des zweiten Fußabdrucks 24, 26, 28 überein, so kann aufgrund der in den Fußabdrücken abgebildeten Einzigartigkeit der Oberflächenstrukturen der Rückschluss getroffen werden, dass das zu überprüfende Batteriezellenbauteil 18, 20, 22 aus dem ersten Zwischenprodukt 12 entstanden ist. Dabei ist unerheblich, ob die Elektroden als zu überprüfenden Batteriezellenbauteil 18, 20, 22 unmittelbar aus der Produktion stammen oder sich bereits auf dem Markt befinden, solange die Elektroden keinen signifikanten strukturellen Änderungen unterworfen werden, wie beispielsweise einer mechanischen oder thermischen Beschädigung, die die Oberflächenstruktur erheblich verändern.

Mit Blick auf die Ultraschallspektren des ersten und dritten Fußabdrucks 10, 32 fällt die durch den Prozessschritt des Kalanderns bewirkte mechanische Veränderung der Oberflächenstruktur in den Ultraschallspektren auf. Beispielsweise wird die Veränderung der Oberflächenstruktur anhand einer geringen Stärke des erfassten Ultraschallspektrums deutlich. Derartige Veränderungen können dazu führen, dass die Herkunft des zu überprüfenden Batteriezellenbauteils 18, 20, 22 möglicherweise nicht mehr verlässlich bestimmt werden kann.

Allerdings sind die mechanischen und thermischen Veränderungen entlang der Prozesskette von den Herstellbedingungen abhängig und damit charakteristisch, also im gewissen Rahmen vorhersagbar. Insofern können prozessbedingte Veränderungen der Oberflächenstruktur der Zwischenprodukte 12, 30 durch Erfassen eines Fußabdrucks 10 vor und eines Fußabdrucks 32 nachdem die Oberflächenstruktur verändernden Prozessschritte berücksichtigt und eine Korrelation der entsprechenden Fußabdrücke 10, 32 zueinander ermittelt werden.

Wie exemplarisch in Figur 1 dargestellt ist, entspricht der zweite Fußabdruck 24, 26, 28 jeweils einem Teilabschnitt des dritten Fußabdrucks 32. Demnach kann über den Abgleich des zweiten Fußabdrucks 24, 26, 28 mit dem dritten Fußabdruck 32 ermittelt werden, ob das zu überprüfende Batteriezellenbauteil 18, 20, 22 aus dem zweiten Zwischenprodukt 30 entstanden ist. Über die oben beschriebene bekannte Korrelation zwischen dem ersten und dem dritten Fußabdruck 10, 32 kann dann ein Rückschluss von dem zu überprüfenden Batteriezellenbauteils 18, 20, 22 auf das erste Zwischenprodukt 12 gezogen werden. Mit anderen Worten kann so die Herkunft des zu überprüfenden Batteriezellenbauteils 18, 20, 22 bestimmt werden.

Im Rahmen der Elektrodenfertigung können zahlreiche Trocknungsschritte erfolgen, die unter Umständen ebenfalls die Oberflächenstruktur der Zwischenprodukte verändern können. Beispielsweise kann die hergestellte Vielzahl von Elektroden einem weiteren Prozessschritt in Gestalt eines Trocknungsschritts unterworfen sein. Obgleich ein derartiger Trocknungsschritt in Figur 1 nicht dargestellt ist, ist dieser nicht zu vernachlässigen, da dieser eine Veränderung der Oberflächenstruktur der Elektroden bewirken kann. Thermisch bedingte Veränderungen der Oberflächenstruktur können allerdings analog durch den oben beschriebenen Ansatz zur Korrelationsbestimmung berücksichtigt werden.

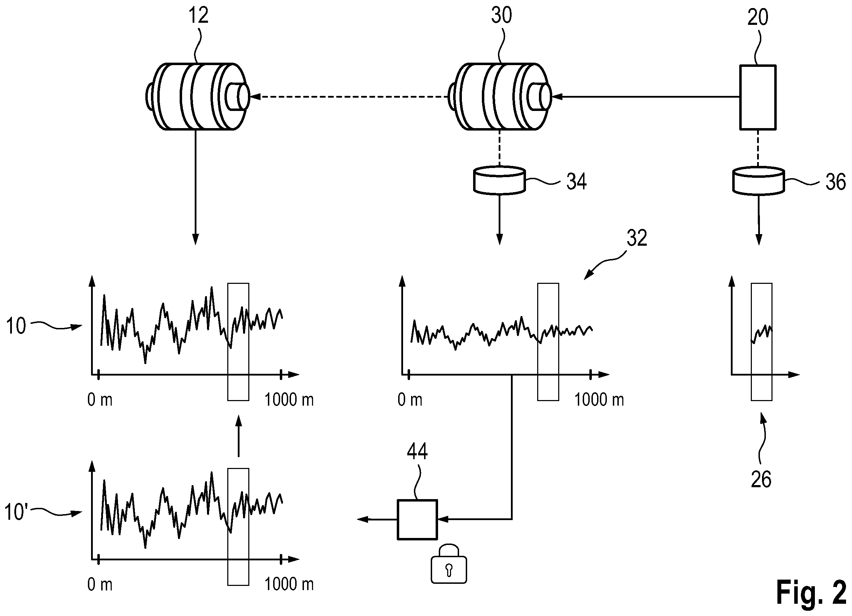

Figur 2 zeigt eine schematische Darstellung eines erfindungsgemäßen Verfahrens gemäß einer Durchführungsform unter Verwendung eines neuronalen Netzwerks 44. Unter Verwendung eines neuronalen Netzwerkes 44 kann ein realer Sensor eingespart werden. Zur anschaulichen Erklärung des Wirkprinzips des neuronalen Netzwerks 44 ist das Verfahren nur ausschnittsweise in Figur 2 dargestellt. Eine wiederholende Beschreibung bereits beschriebener Merkmale wird daher weggelassen.

Der dem zu überprüfenden Batteriezellenbauteil 20 zugehörige zweite Fußabdruck 26 wird auch in dieser Durchführungsform mit dem dritten Fußabdruck 32 verglichen und eine Herkunft zu dem zweiten Zwischenprodukt 30 bestimmt. Da in dieser Durchführungsform kein realer Sensor zur Erfassung des beispielhaft dargestellten ersten Fußabdrucks 10 vorhanden ist, wird der erste Fußabdruck 10 durch einen virtuell erfassten ersten Fußabdruck 10' ersetzt. Der virtuell erfasste erste Fußabdruck 10' wird durch ein mittels überwachtes Lernen trainiertes neuronales Netzwerk 44 aus dem dritten Fußabdruck 32 berechnet. Dies ist für jede einzelne Herstellungsanlage möglich, da die Veränderungen der Oberflächenstrukturen deterministisch durch die Herstellfaktoren einer jeden Herstellungslange vorgegeben sind.

Das neuronale Netzwerk 44 wurde mit Trainingsdaten trainiert, die spezifisch sind für die spezifische Herstellungsanlage. Die Trainingsdaten umfassen eine Vielzahl von Trainingsfußabdrücken und eine Vielzahl von geänderten Trainingsfußabdrücken, wobei die Trainingsfußabdrücke indikativ sind für jeweils eine Oberflächenstruktur des ersten Zwischenprodukts 12 von einer Vielzahl von Batteriezellenbauteilen und die geänderten Trainingsfußabdrücke indikativ sind für jeweils eine Oberflächenstruktur des zweiten Zwischenprodukts 30 der Vielzahl von Batteriezellenbauteilen.

Der durch das neuronale Netzwerk 44 virtuell erfasste erste Fußabdruck 10' kann somit dem ersten Zwischenprodukt 12 zugeordnet und die Herkunft des zu überprüfenden Batteriezellenbauteils 20 zu dem ersten Zwischenprodukt 12 rückverfolgt werden.

### Bezugszeichenliste

- 10, 10': erster Fußabdruck
- 12: erstes Zwischenprodukt
- 14: herzustellendes Batteriezellenbauteil
- 16: erste Sensoreinheit
- 18-22: zu überprüfendes Batteriezellenbauteil
- 24-28: zweiter Fußabdruck
- 30: zweites Zwischenprodukt
- 32: dritter Fußabdruck
- 34: zweite Sensoreinheit
- 36: dritte Sensoreinheit
- 38: Rolle
- 40, 42: drittes Zwischenprodukt

## Patentansprüche

1. Verfahren zum Rückverfolgen einer Herkunft eines Batteriezellenbauteils, umfassend die Schritte:
Erfassen eines ersten Fußabdrucks (10, 10'), der indikativ ist für eine individuelle und einzigartige Oberflächenstruktur eines ersten Zwischenprodukts (12) eines herzustellenden Batteriezellenbauteils (14), mittels einer ersten Sensoreinheit (16) und
Bestimmen einer Herkunft eines zu überprüfenden Batteriezellenbauteils (18, 20, 22) unter Verwendung des ersten Fußabdrucks (10, 10') und eines zweiten Fußabdrucks (24, 26, 28), der indikativ ist für eine individuelle und einzigartige Oberflächenstruktur des zu überprüfenden Batteriezellenbauteils (18, 20, 22).

2. Verfahren nach Anspruch 1, **dadurch gekennzeichnet, dass** das Batteriezellenbauteil eine Elektrode oder ein Separator ist.

3. Verfahren nach einem der vorangehenden Ansprüche, gekennzeichnet, dass eine Vielzahl von Fußabdrücken mittels der ersten Sensoreinheit (16) erfasst wird, wobei die Fußabdrücke indikativ sind für jeweils eine Oberflächenstruktur eines ersten Zwischenprodukts (12), von einer Vielzahl von Batteriezellenbauteilen und das Bestimmen der Herkunft des zu überprüfenden Batteriezellenbauteils (18, 20, 22) unter Verwendung der Vielzahl von Fußabdrücken erfolgt.

4. Verfahren nach einem der vorangehenden Ansprüche, **dadurch gekennzeichnet, dass** die erste Sensoreinheit (16) einen ersten Ultraschallsender und einen ersten Ultraschallempfänger zum Erfassen des ersten Fußabdrucks (10, 10') umfasst.

5. Verfahren nach einem der vorangehenden Ansprüche, ferner **gekennzeichnet durch** die Schritte:
nach dem Erfassen des ersten Fußabdrucks (10, 10') mittels der ersten Sensoreinheit (16), Durchführen eines Prozessschrittes zum Überführen des ersten Zwischenprodukts (12) in ein zweites Zwischenprodukt (30),
Erfassen eines dritten Fußabdrucks (32), der indikativ ist für eine Oberflächenstruktur des zweiten Zwischenprodukts (30) des herzustellenden Batteriezellenbauteils (14), mittels einer zweiten Sensoreinheit (34),
wobei das Bestimmen der Herkunft des zu überprüfenden Batteriezellenbauteils (18, 20, 22) ferner unter der Verwendung des dritten Fußabdrucks (32) erfolgt.

6. Verfahren nach Anspruch 5, **dadurch gekennzeichnet, dass** ein Abgleich des zweiten Fußabdrucks (24, 26, 28) mit dem dritten Fußabdruck (32) erfolgt und basierend auf einem Ergebnis des Abgleichs die Herkunft des zu überprüfenden Batteriezellenbauteils (18, 20, 22) bestimmt wird.

7. Verfahren nach Anspruch 5 oder 6, **dadurch gekennzeichnet, dass** die erste Sensoreinheit (16) ein mittels Trainingsdaten trainiertes neuronales Netzwerk (44) umfasst und/oder die zweite Sensoreinheit (34) einen zweiten Ultraschallsender und einen zweiten Ultraschallempfänger zum Erfassen des dritten Fußabdrucks (32) umfasst.

8. Verfahren nach Anspruch 7, **dadurch gekennzeichnet, dass** die Trainingsdaten eine Vielzahl von Trainingsfußabdrücken und eine Vielzahl von geänderten Trainingsfußabdrücken umfassen, wobei die Trainingsfußabdrücke indikativ sind für jeweils eine Oberflächenstruktur eines ersten Zwischenprodukts (12) von einer Vielzahl von Batteriezellenbauteilen und die geänderten Trainingsfußabdrücke indikativ sind für jeweils eine Oberflächenstruktur eines zweiten Zwischenprodukts (30) der Vielzahl von Batteriezellenbauteilen.

9. Vorrichtung zum Rückverfolgen einer Herkunft eines Batteriezellenbauteils, aufweisend:
eine erste Sensoreinheit (16) zum Erfassen eines ersten Fußabdrucks (10, 10'), der indikativ ist für eine individuelle und einzigartige Oberflächenstruktur eines ersten Zwischenprodukts (12) eines herzustellenden Batteriezellenbauteils (14), und
eine Steuereinheit, die dazu eingerichtet ist, das Verfahren nach einem der vorangehenden Ansprüche durchzuführen.

10. Vorrichtung nach Anspruch 9, **dadurch gekennzeichnet, dass** die erste Sensoreinheit (12) einen ersten Ultraschallsender und einen ersten Ultraschallempfänger zum Erfassen des ersten Fußabdrucks (10, 10') umfasst.

11. Vorrichtung nach Anspruch 9 oder 10, **gekennzeichnet durch**:
eine Verarbeitungseinheit zum Durchführen eines Prozessschrittes zum Überführen des ersten Zwischenprodukts (12) in ein zweites Zwischenprodukt (30) und
eine zweite Sensoreinheit (34) zum Erfassen eines dritten Fußabdrucks (32), der indikativ ist für eine Oberflächenstruktur des zweiten Zwischenprodukts (30) des herzustellenden Batteriezellenbauteils (14),
wobei die Steuereinheit ferner dazu eingerichtet ist, die Herkunft des zu überprüfenden Batteriezellenbauteils (18, 20, 22) unter der Verwendung des dritten Fußabdrucks (32) zu bestimmen.

12. Vorrichtung nach Anspruch 11, **dadurch gekennzeichnet, dass** die Steuereinheit dazu eingerichtet ist, den zweiten Fußabdruck (24, 26, 28) mit dem dritten Fußabdruck (32) abzugleichen und basierend auf einem Ergebnis des Abgleichs die Herkunft des zu überprüfenden Batteriezellenbauteils (18, 20, 22) zu bestimmen.

13. Vorrichtung nach Anspruch 11 oder 12, **dadurch gekennzeichnet, dass** die erste Sensoreinheit (12) ein mittels Trainingsdaten trainiertes neuronales Netzwerk (44) zum Erfassen des ersten Fußabdrucks (10, 10') und/oder die zweite Sensoreinheit (34) einen zweiten Ultraschallsender und einen zweiten Ultraschallempfänger zum Erfassen des dritten Fußabdrucks (32) umfasst.

14. Vorrichtung nach Anspruch 13, **gekennzeichnet durch** eine Speichereinheit, auf welcher die Trainingsdaten gespeichert sind, wobei die Trainingsdaten eine Vielzahl von Trainingsfußabdrücken und eine Vielzahl von geänderten Trainingsfußabdrücken umfassen, wobei die Trainingsfußabdrücke indikativ sind für jeweils eine Oberflächenstruktur eines ersten Zwischenprodukts (12) von einer Vielzahl von Batteriezellenbauteilen und die geänderten Trainingsfußabdrücke indikativ sind für jeweils eine Oberflächenstruktur eines zweiten Zwischenprodukts (30) der Vielzahl von Batteriezellenbauteilen.

15. Vorrichtung nach einem der Ansprüche 9 bis 14, **dadurch gekennzeichnet, dass** die erste Sensoreinheit (12) einen dritten Sensor zum Erfassen von einer Materialeigenschaft des herzustellenden Batteriezellenbauteils (14) umfasst und der erste Fußabdruck (10, 10') ferner indikativ ist für die Materialeigenschafft des herzustellenden Batteriezellenbauteils (14).

## Claims

1. Method for tracing a source of a battery cell component, comprising the following steps:
detecting a first footprint (10, 10'), which is indicative of an individual and unique surface structure of a first intermediate product (12) of a battery cell component (14) to be manufactured, by means of a first sensor unit (16) and determining a source of a battery cell component (18, 20, 22) to be tested, using the first footprint (10, 10') and a second footprint (24, 26, 28), which is indicative of an individual and unique surface structure of the battery cell component (18, 20, 22) to be tested.

2. Method according to Claim 1, **characterized in that** the battery cell component is an electrode or a separator.

3. Method according to either one of the preceding claims, **characterized in that** a plurality of footprints are detected by means of the first sensor unit (16), wherein the footprints are indicative of each surface structure of a first intermediate product (12) of a plurality of battery cell components and the source of the battery cell component (18, 20, 22) to be tested is determined using the plurality of footprints.

4. Method according to any one of the preceding claims, **characterized in that** the first sensor unit (16) comprises a first ultrasonic transmitter and a first ultrasonic receiver for detecting the first footprint (10, 10').

5. Method according to any one of the preceding claims, further **characterized by** the following steps:
after detecting the first footprint (10, 10') by means of the first sensor unit (16), performing a process step for transforming the first intermediate product (12) into a second intermediate product (30),
detecting a third footprint (32), which is indicative of a surface structure of the second intermediate product (30) of the battery cell component (14) to be manufactured, by means of a second sensor unit (34),
wherein the source of the battery cell component (18, 20, 22) to be tested is furthermore determined using the third footprint (32).

6. Method according to Claim 5, **characterized in that** the second footprint (24, 26, 28) is compared with the third footprint (32) and the source of the battery cell component (18, 20, 22) to be tested is determined based on a result of the comparison.

7. Method according to Claim 5 or 6, **characterized in that** the first sensor unit (16) comprises a neural network (44) trained by means of training data and/or the second sensor unit (34) comprises a second ultrasonic transmitter and a second ultrasonic receiver for detecting the third footprint (32).

8. Method according to Claim 7, **characterized in that** the training data include a plurality of training footprints and a plurality of modified training footprints, wherein the training footprints are indicative of each surface structure of a first intermediate product (12) of a plurality of battery cell components and the modified training footprints are indicative of each surface structure of a second intermediate product (30) of the plurality of battery cell components.

9. Device for tracing a source of a battery cell component, comprising:
a first sensor unit (16) for detecting a first footprint (10, 10'), which is indicative of an individual and unique surface structure of a first intermediate product (12) of a battery cell component (14) to be manufactured, and
a control unit, which is set up to perform the method according to any one of the preceding claims.

10. Device according to Claim 9, **characterized in that** the first sensor unit (12) comprises a first ultrasonic transmitter and a first ultrasonic receiver for detecting the first footprint (10, 10').

11. Device according to Claim 9 or 10, **characterized by**:
a processing unit for performing a process step for transforming the first intermediate product (12) into a second intermediate product (30) and
a second sensor unit (34) for detecting a third footprint (32), which is indicative of a surface structure of the second intermediate product (30) of the battery cell component (14) to be manufactured,
wherein the control unit is furthermore set up to determine the source of the battery cell component (18, 20, 22) to be tested using the third footprint (32).

12. Device according to Claim 11, **characterized in that** the control unit is set up to compare the second footprint (24, 26, 28) with the third footprint (32) and to determine the source of the battery cell component (18, 20, 22) to be tested based on a result of the comparison.

13. Device according to Claim 11 or 12, **characterized in that** the first sensor unit (12) comprises a neural network (44) trained by means of training data for detecting the first footprint (10, 10') and/or the second sensor unit (34) comprises a second ultrasonic transmitter and a second ultrasonic receiver for detecting the third footprint (32).

14. Device according to Claim 13, **characterized by** a storage unit on which the training data are stored, wherein the training data include a plurality of training footprints and a plurality of modified training footprints, wherein the training footprints are indicative of each surface structure of a first intermediate product (12) of a plurality of battery cell components and the modified training footprints are indicative of each surface structure of a second intermediate product (30) of the plurality of battery cell components.

15. Device according to any one of Claims 9 to 14, **characterized in that** the first sensor unit (12) comprises a third sensor for detecting a material property of the battery cell component (14) to be manufactured and the first footprint (10, 10') is further indicative of the material property of the battery cell component (14) to be manufactured.

## Revendications

1. Procédé de traçage d'une origine d'un composant d'élément de batterie, comprenant les étapes suivantes : détection d'une première empreinte (10, 10'), qui indique une structure de surface individuelle et unique d'un premier produit intermédiaire (12) d'un composant d'élément de batterie (14) à fabriquer, au moyen d'une première unité de détection (16) et détermination d'une origine d'un composant d'élément de batterie (18, 20, 22) à vérifier en utilisant la première empreinte (10, 10') et une deuxième empreinte (24, 26, 28), qui indique une structure de surface individuelle et unique du composant d'élément de batterie (18, 20, 22) à vérifier.

2. Procédé selon la revendication 1, **caractérisé en ce que** le composant d'élément de batterie est une électrode ou un séparateur.

3. Procédé selon l'une des revendications précédentes, **caractérisé en ce qu'**une pluralité d'empreintes sont détectées au moyen de la première unité de détection (16), les empreintes indiquant dans chaque cas une structure de surface d'un premier produit intermédiaire (12) d'une pluralité de composants d'élément de batterie, et l'origine du composant d'élément de batterie (18, 20, 22) à vérifier étant déterminée en utilisant la pluralité d'empreintes.

4. Procédé selon l'une des revendications précédentes, **caractérisé en ce que** la première unité de détection (16) comprend un premier émetteur d'ultrasons et un premier récepteur d'ultrasons pour détecter la première empreinte (10, 10').

5. Procédé selon l'une des revendications précédentes, **caractérisé en outre par** les étapes :
après la détection de la première empreinte (10, 10') au moyen de la première unité de détection (16), réalisation d'une étape de processus de transfert du premier produit intermédiaire (12) dans un deuxième produit intermédiaire (30),
détection d'une troisième empreinte (32), qui indique une structure de surface du deuxième produit intermédiaire (30) du composant d'élément de batterie (14) à fabriquer, au moyen d'une deuxième unité de détection (34),
la détermination de l'origine du composant d'élément de batterie (18, 20, 22) à vérifier étant en outre effectuée en utilisant la troisième empreinte (32).

6. Procédé selon la revendication 5, **caractérisé en ce que** la deuxième empreinte (24, 26, 28) est comparée à la troisième empreinte (32) et l'origine du composant d'élément de batterie (18, 20, 22) à vérifier est déterminée sur la base d'un résultat de la comparaison.

7. Procédé selon la revendication 5 ou 6, **caractérisé en ce que** la première unité de détection (16) comprend un réseau neuronal (44) entraîné au moyen de données d'apprentissage et/ou la deuxième unité de détection (34) comprend un deuxième émetteur d'ultrasons et un deuxième récepteur d'ultrasons pour détecter la troisième empreinte (32).

8. Procédé selon la revendication 7, **caractérisé en ce que en ce que** les données d'apprentissage comprennent une pluralité d'empreintes d'apprentissage et une pluralité d'empreintes d'apprentissage modifiées, les empreintes d'apprentissage indiquant dans chaque cas une structure de surface d'un premier produit intermédiaire (12) d'une pluralité de composants d'élément de batterie et les empreintes d'apprentissage modifiées indiquant dans chaque cas une structure de surface d'un deuxième produit intermédiaire (30) de la pluralité de composants d'élément de batterie.

9. Dispositif de traçage d'une origine d'un composant d'élément de batterie, comportant :
une première unité de détection (16) destinée à détecter une première empreinte (10, 10'), qui indique une structure de surface individuelle et unique d'un premier produit intermédiaire (12) d'un composant d'élément de batterie (14) à fabriquer, et
une unité de commande, qui est mise au point pour réaliser le procédé selon l'une des revendications précédentes.

10. Dispositif selon la revendication 9, **caractérisé en ce que** la première unité de détection (12) comprend un premier émetteur d'ultrasons et un premier récepteur d'ultrasons pour détecter la première empreinte (10, 10').

11. Dispositif selon la revendication 9 ou 10, **caractérisé par** :
une unité de traitement permettant de réaliser une étape de processus de transfert du premier produit intermédiaire (12) dans un deuxième produit intermédiaire (30) et
une deuxième unité de détection (34) destinée à détecter une troisième empreinte (32), qui indique une structure de surface du deuxième produit intermédiaire (30) du composant d'élément de batterie (14) à fabriquer,
l'unité de commande étant en outre mise au point pour déterminer l'origine du composant d'élément de batterie (18, 20, 22) à vérifier en utilisant la troisième empreinte (32).

12. Dispositif selon la revendication 11, **caractérisé en ce que** l'unité de commande est mise au point pour comparer la deuxième empreinte (24, 26, 28) à la troisième empreinte (32) et pour déterminer l'origine du composant d'élément de batterie (18, 20, 22) à vérifier sur la base d'un résultat de la comparaison.

13. Dispositif selon la revendication 11 ou 12, **caractérisé en ce que** la première unité de détection (12) comprend un réseau neuronal (44) entraîné au moyen de données d'apprentissage pour détecter la première empreinte (10, 10') et/ou la deuxième unité de détection (34) comprend un deuxième émetteur d'ultrasons et un deuxième récepteur d'ultrasons pour détecter la troisième empreinte (32).

14. Dispositif selon la revendication 13, **caractérisé par** une unité de mémoire dans laquelle les données d'apprentissage sont stockées, les données d'apprentissage comprenant une pluralité d'empreintes d'apprentissage et une pluralité d'empreintes d'apprentissage modifiées, les empreintes d'apprentissage indiquant dans chaque cas une structure de surface d'un premier produit intermédiaire (12) d'une multitude de composants d'élément de batterie et les empreintes d'apprentissage modifiées indiquant dans chaque cas une structure de surface d'un deuxième produit intermédiaire (30) de la pluralité de composants d'élément de batterie.

15. Dispositif selon l'une des revendications 9 à 14, **caractérisé en ce que** la première unité de détection (12) comprend un troisième capteur destiné à détecter une propriété de matériau du composant d'élément de batterie (14) à fabriquer, et la première empreinte (10, 10') indique en outre la propriété de matériau du composant d'élément de batterie (14) à fabriquer.
